# EUROPEAN PATENT APPLICATION

(11) **EP 4 852 097 A1**
(43) Date of publication of application: **09.12.2026**
(21) Application number: 25877939.6
(22) Date of filing: 02.10.2025
(51) Int. Cl.: H01M 4/62, H01M 4/13, H01M 10/0585, H01M 10/052, H01M 4/02

(54) **POSITIVE ELECTRODE COMPOSITE, POSITIVE ELECTRODE, ALL-SOLID-STATE BATTERY, AND METHOD FOR MANUFACTURING POSITIVE ELECTRODE COMPOSITE**

(30) Priority: 10.10.2024 JP 2024177996
(71) Applicant: LG Energy Solution, Ltd., Seoul 07335 (KR)
(72) Inventor: CHIHARA, Kuniko, Yokohama-shi, Kanagawa 220-0011 (JP); MATSUBARA, Keiko, Yokohama-shi, Kanagawa 220-0011 (JP)
(74) Representative: Goddar, Heinz J.
(86) International application number: PCT/KR2025/015834
(87) International publication number: WO 2026/079883

(57) **Abstract**

Provided are a positive electrode composite for suppressing battery characteristics degradation, a positive electrode, an all-solid-state battery and a method for manufacturing a positive electrode composite. The positive electrode composite for an all-solid-state battery according to an embodiment comprises a positive electrode active material, a solid electrolyte, a first conductive material and a second conductive material having lower crystallinity than the first conductive material, wherein the first conductive material is distributed with high density near the positive electrode active material.

## Description

### TECHNICAL FIELD

Embodiments of the present disclosure relate to a positive electrode composite, a positive electrode, an all-solid-state battery and a method for manufacturing a positive electrode composite.

This application is based on and claims priority from Japanese Patent Application No. 2024-177996 filed on October 10, 2024, the disclosure of which is incorporated herein by reference in its entirety.

### BACKGROUND ART

Currently, lithium-ion secondary batteries using liquid electrolytes are being widely used. However, the use of liquid electrolytes may cause short circuits, potentially leading to overheating or explosions, in the event of deformation or external impacts. To improve safety of lithium-ion secondary batteries, all-solid-state batteries that do not use organic electrolytes have recently emerged as next-generation batteries, and research and development activities are being conducted to advance all-solid-state batteries.

Adding conductive materials, for example, acetylene black or carbon nanotubes to electrode materials of all-solid-state batteries is known (see Patent Document 1). These conductive materials may assist the movement of electrons in the electrode materials.

### [Related Art Literature]

### [Patent Literature]

Patent Document 1: Japanese Patent Publication No. 2020-507893

### DISCLOSURE

### Technical Problem

The inventors found that conductive materials play a role in assisting the movement of electrons between active materials, and promotes the decomposition of solid electrolytes during charging and discharging, causing battery characteristics degradation.

The present disclosure is directed to providing a positive electrode composite for suppressing battery characteristics degradation, a positive electrode, an all-solid-state battery and a method for manufacturing a positive electrode composite.

### Technical Solution

The inventors thought that in light of a relationship between the adverse influence of conductive materials on solid electrolytes and the crystallinity of conductive materials, a combination of high crystalline conductive materials and low crystalline conductive materials would suppress the decomposition of solid electrolytes driven by conductive materials. As a result of considerate review, the inventors discovered that when high crystalline conductive materials are distributed with high density near positive electrode active materials, battery characteristics degradation may be suppressed.

The present disclosure may include the following aspects.
[1] A positive electrode composite for an all-solid-state battery, comprising a positive electrode active material, a solid electrolyte, a first conductive material and a second conductive material having lower crystallinity than the first conductive material, wherein the first conductive material is distributed with high density near the positive electrode active material.
[2] The positive electrode composite defined in [1], wherein the first conductive material includes a linear carbon material.
[3] The positive electrode composite defined in [1] or [2], wherein the second conductive material includes a linear carbon material.
[4] The positive electrode composite defined in any one of [1]~[3], wherein the first conductive material includes carbon nanotubes.
[5] The positive electrode composite defined in any one of [1]~[4], wherein the second conductive material includes carbon nanofibers.
[6] The positive electrode composite defined in any one of [1]~[5], wherein the first conductive material and the second conductive material include a carbon material, and wherein a G/D ratio (I_{G}/I_{D}) of the first conductive material is larger than a G/D ratio of the second conductive material where a maximum peak intensity in a range of 1560 cm⁻¹ to 1600 cm⁻¹ in a Raman spectrum is I_{G} and a maximum peak intensity in a range of 1310 cm⁻¹ to 1350 cm⁻¹ is I_{D}.
[7] The positive electrode composite defined in [6], wherein the G/D ratio of the first conductive material is 10 or more and 100 or less when using a diffraction grating of 300 gr/mm.
[8] The positive electrode composite defined in any one of [1]~[7], wherein the first conductive material is included in the positive electrode composite in an amount of 0.01 mass% or more and 1 mass% or less, based on a total mass of the positive electrode active material.
[9] The positive electrode composite defined in any one of [1]~[7], wherein the second conductive material is included in the positive electrode composite in an amount of 0.1 mass% or more and 5 mass% or less, based on a total mass of the positive electrode composite.
[10] The positive electrode composite defined in any one of [1]~[9], wherein the second conductive material is substantially evenly distributed over the positive electrode active material.
[11] The positive electrode composite defined in any one of [1]~[10], wherein a presence proportion of the first conductive material in a first region near the positive electrode active material is larger than a presence proportion of the first conductive material in a second region outside the first region.
[12] The positive electrode composite defined in any one of [1]~[11], wherein a presence proportion of the second conductive material in a second region outside a first region near the positive electrode active material is larger than a presence proportion of the first conductive material in the second region.
[13] A positive electrode comprising the positive electrode composite defined in any one of [1]~[12].
[14] An all-solid-state battery comprising the positive electrode defined in [13].
[15] A method for manufacturing a positive electrode composite, the method comprising the steps of mixing a positive electrode active material with a first conductive material to prepare a positive electrode active material/first conductive material mixture, and mixing the positive electrode active material/first conductive material mixture with a solid electrolyte and a second conductive material having lower crystallinity than the first conductive material.

### Advantageous Effects

According to the present disclosure, the positive electrode composite for suppressing battery characteristics degradation, the positive electrode, the all-solid-state battery and the method for manufacturing the positive electrode composite may be provided.

### BRIEF DESCRIPTION OF THE DRAWINGS

FIG. 1 is a diagram showing the microscopic structure of a positive electrode composite according to an embodiment.
FIG. 2 is a diagram showing the structure of an all-solid-state battery according to an embodiment.
FIG. 3 is a graph showing changes in discharge capacity as a function of discharge rate in Examples 1 to 7 and Comparative Examples 1 to 9.
FIG. 4 is a graph showing rate characteristics of Examples 1 to 7 and Comparative Examples 1 to 9.

### BEST MODE

Hereinafter, a positive electrode composite, a positive electrode, an all-solid-state battery and a method for manufacturing a positive electrode composite according to an embodiment will be described. The following embodiments represents an embodiment of the present disclosure, and are not intended to limit the present disclosure, and any modifications may be made thereto within the technical scope of the present disclosure. Furthermore, any combination of each component and each feature of the embodiments is possible.

Hereinafter, the singular forms are used to refer to 'one or more' unless the context clearly indicates otherwise.

In this specification, when a part such as a layer, film, area or plate is referred to as being 'on' another part, the part may be 'directly on' the other part, and intervening elements may be present. In contrast, when a part such as a layer, film, area or plate is referred to as being 'below' another part, the part may be 'directly below' the other part, and intervening elements may be present. Furthermore, in this specification, when a part is referred to as being 'on' another part, the part may be on top of the other part and may be on bottom of the other part.

In this specification, an average particle size (D₅₀) is defined as a particle size at 50% of a cumulative particle size distribution curve. The average particle size (D₅₀) may be measured, for example, using a laser diffraction method. The laser diffraction method can generally measure particle sizes from the submicron range to a few millimeter (mm), and may obtain the results with high reproducibility and high resolution.

In this specification, the term 'carbon nanotube' (CNT) refers to a carbon material having a diameter of less than 1 µm, with a tubular structure formed by rolling a single layer or multiple layers of graphene sheets. The term 'carbon nanofiber' (CNF) refers to a carbon material having a diameter of less than 1 µm, composed of graphene sheets stacked into a fiber shape.

In this specification, the term 'single-walled carbon nanotube' (SWCNT) refers to a carbon nanotube with a tubular wall composed of a single atomic layer of carbon atoms (i.e., a single layer of graphene sheets). The term 'multi-walled carbon nanotube' (MWCNT) refers to a carbon nanotube with tubular walls composed of multiple atomic layers of carbon atoms (i.e., multiple layers of graphene sheets).

### 1. Positive electrode composite

The positive electrode composite according to this embodiment comprises a positive electrode active material, a solid electrolyte, a first conductive material and a second conductive material having lower crystallinity than the first conductive material, and the first conductive material is distributed with high density near the positive electrode active material.

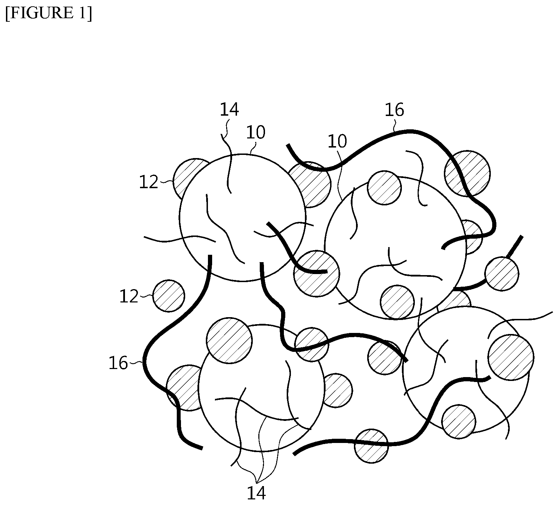

FIG. 1 is a diagram showing the microscopic structure of the positive electrode composite. The positive electrode composite contains positive electrode active material particles 10, solid electrolyte particles 12, the first conductive material 14 and the second conductive material 16. In FIG. 1, the solid electrolyte particles 12 have a smaller size than the positive electrode active material particles 10, and are scattered near the positive electrode active material particles 10. During charging and discharging, lithium ions move between the positive electrode active material particles 10 and the solid electrolyte particles 12 in contact with each other. With the conduction of lithium ions, electrons move between the positive electrode active material particles 10 and an electrode current collector (not shown). The first conductive material 14 and the second conductive material 16 are entangled with the positive electrode active material particles 10. Some of the first conductive material 14 and the second conductive material 16 contact the plurality of positive electrode active material particles 10. During charging and discharging, the first conductive material 14 and the second conductive material 16 may form electron conduction pathways from the positive electrode active material particles 10 to the other positive electrode active material particles 10 or to the current collector. Although FIG. 1 shows the second conductive material 16 has a shape that is thicker and longer than the first conductive material 14, the present disclosure is not limited thereto.

The first conductive material 14 is not located randomly over the positive electrode composite, and is distributed near the positive electrode active material particles 10. Specifically, the first conductive material 14 may be distributed with high density near the positive electrode active material particles 10. In the present specification, 'near' refers to a distance of 50 nm or less. For example, a region near the positive electrode active material particles 10 refers to a region within the distance of 50 nm from the particle surface of the positive electrode active material particles 10. For example, the first conductive material 14 may be distributed near the positive electrode active material particles 10 rather than the solid electrolyte particles 12.

The distribution of the first conductive material 14 may be investigated by the following steps (1) to (5).
(1) Each of the positive electrode active material particles 10 and the first conductive material 14 in a scanning electron microscopic (SEM) image (or any other microscopic image, for example, a transmission electron microscopic (TEM) image or a microscopic Raman image is identified. Hereinafter, these images are simply referred to as 'SEM image').
(2) An area S10 of a first region near the positive electrode active material particles 10 in the SEM image and an area S20 of a second region other than the first region (i.e., a region other than the region near the positive electrode active material particles 10 in the SEM image) are obtained. Here, the first region is a region within the distance of 50 nm outwards from the surface of the positive electrode active material particles 10 in the SEM image. The second region is a region 50 nm or more away from the surface of the positive electrode active material particles 10 in the SEM image.
(3) In the SEM image, an area S11 of a region where the first conductive material 14 is present within the first region, and an area S21 of a region where the first conductive material 14 is present within the second region are obtained.
(4) A presence proportion E11 of the first conductive material 14 in the first region is calculated by E11 = S11/S10. Likewise, a presence proportion E21 of the first conductive material 14 in the second region is calculated by E21 = S21/S20.
(5) Where E11>E21, it indicates the first conductive material 14 is distributed with higher density in the first region than the second region. In other words, it may be evaluated that the first conductive material 14 is distributed with high density near the positive electrode active material particles 10. In contrast, where E11<E21, it indicates that the first conductive material 14 is distributed with higher density in the second region than the first region. In other words, it may be evaluated that the first conductive material 14 is distributed with higher density in other region than the region near the positive electrode active material particles 10.

The absolute values of the presence proportions E11 and E21 of the first conductive material 14 change depending on the amount of the first conductive material 14 added or manufacturing conditions, but in this embodiment, the size relationship is E11>E21. That is, the presence proportion E11 of the first conductive material 14 in the first region (i.e., near the positive electrode active material particles 10) is larger than the presence proportion E21 of the first conductive material 14 in the second region (other region). For example, the presence proportion E11 of the first conductive material 14 in the first region is more than 0 and 1 or less, 0.01 or more and 0.9 or less, 0.1 or more and 0.8 or less, 0.2 or more and 0.7 or less, or 0.3 or more and 0.5 or less. For example, the presence proportion E21 of the first conductive material 14 in the second region is 0 or more and less than 1, 0.01 or more and 0.8 or less, 0.1 or more and 0.5 or less, or 0.2 or more and 0.3 or less.

As an indicator of the level of distribution, a ratio R1=E21/E11 of the presence proportions of the first conductive material 14 in the first region and the second region may be defined. The presence ratio R1 is preferably 0 or more and less than 1, and is, for example, 0.1 or more and 0.8 or less, 0.2 or more and 0.6 or less, or 0.3 or more and 0.5 or less.

On the other hand, the second conductive material 16 may be substantially evenly distributed over the positive electrode active material particles 10. Preferably, the second conductive material 16 may be substantially evenly distributed over the positive electrode active material particles 10 and the solid electrolyte particles 12. For example, the second conductive material 16 may be randomly distributed in the positive electrode composite. However, the second conductive material 16 may be unevenly distributed in the positive electrode composite. As described above, the second conductive material 16 may have a different distribution from the first conductive material 14. For example, the difference in distribution of the first conductive material 14 and the second conductive material 16 may be evaluated using the above-described presence ratio by the following steps (1) to (5).
(1) In addition to the positive electrode active material particles 10 and the first conductive material 14, the second conductive material 16 in the SEM image is identified.
(2) An area S12 of a region where the second conductive material 16 is present within the first region (i.e., the region near the positive electrode active material particles 10) in the SEM image, and an area S22 of a region where the second conductive material 16 is present within the second region (i.e., a region other than the region near the positive electrode active material particles 10) in the SEM image are obtained.
(3) A presence proportion E12 of the second conductive material 16 in the first region is calculated by E12 = S12/S10. Likewise, a presence proportion E22 of the second conductive material 16 in the second region is calculated by E22 = S22/S20.
(4) A presence ratio R2=E22/E12 of the second conductive material 16 in the first region and the second region is calculated.
(5) The presence ratio R1 of the first conductive material 14 and the presence ratio R2 of the second conductive material 16 are compared. When a difference between R2 and R1 is 0.1 or more, the second conductive material 16 may be evaluated as having a different distribution from the first conductive material 14. The presence ratio R2 of the second conductive material 16 is preferably 0.5 or more and 1.5 or less, and is, for example, 0.8 or more and 1.2 or less, or 0.9 or more and 1.1 or less.

Preferably, the presence proportion E11 of the first conductive material 14 in the first region is larger than the presence proportion E12 of the second conductive material 16 in the first region (E11>E12). As a result, the contribution of the first conductive material 14 to the conduction of electrons in the first region may be larger than the second conductive material 16 (for example, the conduction of electrons by the first conductive material 14 may be dominant in the first region). Preferably, the presence proportion E22 of the second conductive material 16 in the second region is larger than the presence proportion E21 of the first conductive material 14 in the second region (E21<E22). As a result, the contribution of the second conductive material 16 to the conduction of electrons in the second region may be larger than the first conductive material 14 (for example, the conduction of electrons by the second conductive material 16 may be dominant in the second region). However, the conduction of electrons is not limited to the above-described example, and the two conductive materials (the first conductive material 14, the second conductive material 16) in the first region and/or the second region may significantly contribute to the conduction of electrons.

### 1-1. Positive electrode active material

During charging and discharging, the positive electrode active material intercalates and deintercalates lithium ions to/from the positive electrode, together with a negative electrode active material as described below.

The positive electrode active material may include any positive electrode active material commonly used in the corresponding technical field. The positive electrode active material is not limited to a particular type and may include a compound capable of reversible insertion (intercalation) and extraction (deintercalation) of lithium. For example, the positive electrode active material includes a lithium metal composite oxide. A specific example may include lithium metal composite oxide containing lithium and at least one metal of cobalt, manganese, nickel, copper, vanadium or aluminum, and particularly lithium transition metal oxide. More specifically, the lithium metal composite oxide may include lithium-manganese oxide (for example, LiMnO_{2,} LiMnO_{3,} LiMn₂O_{3,} LiMn₂O₄); lithium-cobalt oxide (for example, LiCoO₂); lithium-nickel oxide (for example, LiNiO₂); lithium-copper oxide (for example, Li₂CuO₂); lithium-vanadium oxide (for example, LiV₃O₈); lithium-nickel-manganese oxide (for example, LiNi_{1-z}Mn_{z}O₂ (0 < z < 1), LiMn_{2-z}Ni_{z}O₄ (0 < z < 2)); lithium-nickel-cobalt oxide (for example, LiNi_{1-y}Co_{y}O₂ (0 < y < 1))); lithium-manganese-cobalt oxide (for example, LiCo_{1-z}Mn_{z}O₂ (0 < z < 1), LiMn_{2-y}Co_{y}O₄ (0 < y < 2)); lithium-nickel-manganese-cobalt oxide (for example, Li(NiₓCo_{y}Mn_{z})O₂ (0<x<1, 0<y<1, 0<z<1, x+y+z=1), Li(NiₓCo_{y}Mn_{z})O₄ (0<x<2, 0<y<2, 0<z<2, x+y+z=2)); lithium-nickel-cobalt-metal (M) oxide (for example, Li(NiₓCo_{y}Mn_{z}M_{w})O₂ (M is selected from the group consisting of Al, Fe, V, Cr, Ti, Ta, Mg and Mo, and 0<x<1, 0<y<1, 0<z<1, 0<w<1, x+y+z+w=1)); Li-rich positive electrodes (for example, pLi₂MnO₃-(1-p)Li(NiₓCo_{y}Mn_{z})O₂ (0<x<1, 0<y<1, 0<z<1, x+y+z=1, 0<p<1); compounds in which transition metal elements in these compounds are partially replaced by one or more other metal elements. The positive electrode active material layer may contain one or more of them. However, the present disclosure is not limited thereto.

In particular, the lithium transition metal oxide with high nickel content which is effective in increasing the capacity of the battery preferably contains nickel in an amount of 50 mol% or more based on the total quantity of transition metal. Examples of the lithium transition metal oxide may include LiₐNiO₂ (0.5 ≤ a ≤ 1.5); Liₐ(NiₓCo_{y}Mn_{z})O₂ (0.5 ≤ a ≤ 1.5, 0.5 ≤ x < 1,0 < y < 0.5, 0 < z < 0.5, x + y + z = 1); Liₐ(NiₓCo_{y}Mn_{z})O₂ (0.7 ≤ x < 1,0 < y < 0.3, 0 < z < 0.3, x + y + z = 1); Liₐ(NiₓCo_{y}Mn_{z})O₂ (0.8 ≤ x < 1, 0 < y < 0.2, 0 < z < 0.2, x + y + z = 1); Liₐ(NiₓCo_{y}Mn_{z})O₂(0.9≤x < 1, 0 < y < 0.1, 0<z<0.1, x+y+z=1); LiₐNi_{1-y}Co_{y}O₂ (0.5≤a≤1.5, 0<y≤0.5); LiₐNi_{1-z}Mn_{z}O₂ (0.5≤a≤1.5, 0 < z≤0.5); Liₐ(NiₓCo_{y}Mn_{z})O₄ (0.5≤a≤1.5, 1≤x<2, 0<y<1, 0<z<1, x+y+z=2); Liₐ(NiₓCo_{y}M_{w})O₂ (M is at least one selected from the group consisting of Al, Fe, V, Cr, Ti, Ta, Mg, Mo, Zr, Zn, Ga and In, and 0.5≤x < 1, 0 < y < 0.5, 0 < w < 0.5, x+y+w=1); Liₐ(NiₓCo_{y}Mn_{z}M_{w})O₂ (M is at least one selected from the group consisting of Al, Fe, V, Cr, Ti, Ta, Mg, Mo, Zr, Zn, Ga and In, and 0.5≤a≤1.5, 0.5≤x < 1, 0 < y < 0.5, 0 < z < 0.5, 0 < w < 0.5, x+y+z+w=1); compounds in which transition metal atoms in these compounds are at least partially replaced by one or more other metal elements (for example, at least one of Al, Fe, V, Cr, Ti, Ta, Mg, Mo, Zr, Zn, Ga or In); and compounds in which an oxygen atoms in these compounds are partially replaced by one or more other non-metal elements (for example, at least one of P, F, S or N). Preferably, the lithium transition metal oxide may be represented by LiₐNiₓM_{y}O₂ (M is at least one metal element other than Ni, and is, for example, at least one selected from the group consisting of Al, Fe, Co, Mn, V, Cr, Ti, Ta, Mg, Mo, Zr, Zn, Ga and In, 0 < a≤1.05, x+y=1), and the value of x may be, for example, 0.5 or more, 0.6 or more, 0.7 or more, 0.8 or more, or 0.9 or more, and may be, for example, 1 or less, 0.9 or less, 0.8 or less, 0.7 or less, or 0.6 or less. The positive electrode active material may include at least one of the above-described positive electrode active materials, but is not limited thereto. In addition, there may be a difference in substitution concentration distribution between the interior andn the surface of a same particle. In addition, particle surface coating may be used. For example, surface coating with metal oxide, lithium transition metal oxide or polymer may be used, but is not limited thereto.

In particular, in terms of improved capacity characteristics and stability of the battery, LiₐNiO₂, Liₐ(Ni_{0.5}Mn_{y}Co_{z})O₂(y+z=0.5), Liₐ(Ni_{0.6}Mn_{y}Co_{z})O₂(y+z=0.4), Liₐ(Ni_{0.7}Mn_{y}Co_{z})O₂(y+z=0.3), Liₐ(Ni_{0.8}Mn_{y}Co_{z})O₂(y+z=0.2), Liₐ(Ni_{0.8}Co_{y}Mn_{z}Al_{w})O₂(y+z+w=0.2), Liₐ(Ni_{0.85}Co_{y}Mn_{z})O₂(y+z=0.15), Liₐ(Ni_{0.85}Co_{y}Mn_{z}Al_{w})O₂(y+z+w=0.15), Liₐ(Ni_{0.9}Co_{y}Mn_{z})O₂(y+z=0.1), Liₐ(Ni_{0.9}Co_{y}Mn_{z}Al_{w})O₂(y+z+w=0.1), Liₐ(Ni_{0.9}Co_{y}Mn_{z})O₂(y+z=0.1), or Liₐ(Ni_{0.95}Co_{y}Mn_{z}Al_{w})O₂(y+z+w=0.05) is desirable. Here, the values of a may be all, for example, 0.5≤a≤1.5, and preferably 1.0≤a≤1.5.

More specifically, LiNiO₂, Li(Ni_{0.5}Mn_{0.3}Co_{0.2})O₂, Li(Ni_{0.6}Mn_{0.2}Co_{0.2})O₂, Li(Ni_{0.7}Mn_{0.15}Co_{0.15})O₂, Li(Ni_{0.8}Mn_{0.1}Co_{0.1})O₂, Li(Ni_{0.8}Co_{0.15}Al_{0.05})O₂, Li(Ni_{0.8}Co_{0.1}Mn_{0.05}Al_{0.05})O₂, Li(Ni_{0.85}Co_{0.10}Mn_{0.05})O₂, Li(Ni_{0.85}Co_{0.10}Mn_{0.03}Al_{0.02})O₂, Li(Ni_{0.9}Co_{0.05}Mn_{0.05})O₂, Li(Ni_{0.9}Co_{0.05}Al_{0.05})O₂, Li(Ni_{0.95}Co_{0.03}Mn_{0.02})O₂, or Li(Ni_{0.95}Co_{0.03}Al_{0.02})O₂ is desirable.

The particle size of the positive electrode active material particles 10 is, for example, 10 nm to 20 µm, 50 nm to 18 µm, 100 nm to 15 µm, 200 nm to 13 µm, 500 nm to 12 µm, or 1 µm to 10 µm. When the particle size of the positive electrode active material particles 10 is 10 nm or more, particle surface degradation may be suppressed. When the particle size of the positive electrode active material particles 10 is 20 µm or less, an excessive increase of lithium diffusion pathways may be prevented, and electron conduction pathways by the first conductive material 14 and the second conductive material 16 may be efficiently formed.

Preferably, the positive electrode active material has a coating containing metal oxide on the particle surface. The metal oxide may include at least one selected from the group consisting of LiNbO_{2,} LiNbO_{3,} LiCoO₂ and Li₂TiO₃. More preferably, a coating containing LiNbO₂ is formed on the particle surface of the lithium transition metal oxide. By the coating, the internal resistance of the positive electrode may be reduced. When the positive electrode active material particles 10 have the coating, the first conductive material 14 and the second conductive material 16 may be present on the outer side of the corresponding coating.

### 1-2. Solid electrolyte

The solid electrolyte assists in the transport of lithium ions between the positive electrode active material and the negative electrode active material. The solid electrolyte particles 12 may mediate the transport of lithium ions when they contact the positive electrode active material particles 10, the negative electrode active material particles, or other solid electrolyte particles 12.

To primarily transport lithium ions within the electrode, the solid electrolyte may include any material having high ionic conductivity (for example, ionic conductivity of 10⁻⁵ s/m or more, preferably 10⁻⁴ s/m or more), and is not limited to a particular substance.

The solid electrolyte may include, for example, at least one selected from the group consisting of a sulfide-based solid electrolyte, an oxide-based solid electrolyte and a polymer-based solid electrolyte. The polymer-based solid electrolyte may include a polymer solid electrolyte formed by adding a polymer resin to a solvated lithium salt, or a polymer gel electrolyte in which an organic electrolyte containing an organic solvent and a lithium salt, an ionic liquid and a monomer or an oligomer are incorporated into a polymer resin. Meanwhile, the sulfide-based solid electrolyte has high ionic conductivity, and the oxide-based solid electrolyte has high electrochemical stability. Therefore, a proper solid electrolyte substance may be selected and used according to the characteristics of the solid electrolyte and the purpose of use of the battery. Preferably, the solid electrolyte includes a sulfide-based solid electrolyte.

The sulfide-based solid electrolyte contains sulfur (S) and has ionic conductivity of Group 1 or 2 metals in the periodic table. The sulfide-based solid electrolyte may include, for example, Li-P-S-based glass or Li-P-S-based glass ceramic. The sulfide-based solid electrolyte may include glassy solid electrolytes, crystalline solid electrolytes or glass ceramic solid electrolytes. Specifically, the sulfide-based solid electrolyte may include Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, Argylodite-based solid electrolytes (for example, Li₆PS₅X (X: Cl, Br, I)), LGPS-based solid electrolytes (Li₁₀GeP₂S₁₂, Li_{3.25}Ge_{0.25}P_{0.75}S₄), Li₇P₃S₁₁, but is not limited thereto. For example, the solid electrolyte may contain at least one selected from the group consisting of the above-described compounds.

The oxide-based solid electrolyte contains oxygen (O) and has ionic conductivity of Group 1 or 2 metals in the periodic table. The oxide-based solid electrolyte may include LLTO-based compounds, Li₆La₂CaTa₂O₁₂, Li₆La₂ANb₂O₁₂ (A: Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (0≤x≤1, 0≤y≤1), LiAlₓZr₂₋ₓ(PO₄)₃ (0≤x≤1, 0≤y≤1), LiTiₓZr₂₋ₓ(PO₄)₃(0≤x≤1, 0≤y≤1), LISICON-based compounds, LIPON-based compounds, perovskite-based compounds, NASICON-based compounds or LLZO-based compounds, but is not limited thereto. For example, the solid electrolyte may contain at least one selected from the group consisting of the above-described compounds.

The polymer solid electrolyte may contain, for example, polyester-based polymer, polycarbonate-based polymer, acrylate-based polymer, polysiloxane-based polymer, phosphazene-based polymer, polyethylene-based derivatives, alkylene oxide derivatives such as polyethylene oxide (PEO) or polypropylene oxide (PPO), phosphoric acid ester polymer, polyagitation lysine, polyester sulfide, polyvinyl alcohol, polyvinylidene fluoride or polymer containing ionic dissociation groups. For example, the solid electrolyte may contain at least one selected from the group consisting of the above-described compounds.

The amount of the solid electrolyte may, for example, be 1 mass% to 70 mass%, 5 mass% to 50 mass%, 10 mass% to 45 mass%, or 20 mass % to 40 mass%, based on the total weight of the positive electrode active material. When the amount of the solid electrolyte particles is 1 mass% or more, the solid electrolyte particles may sufficiently form lithium ion conduction pathways by surrounding the particle surface of the lithium transition metal oxide. When the amount of the solid electrolyte particles is 50 mass% or less, agglomeration of the solid electrolyte particles away from the lithium transition metal oxide may be suppressed.

The particle size of the solid electrolyte particles 12 is, for example, 10 nm to 10 µm, 50 nm to 5 µm, 100 nm to 1 µm, or 200 nm to 500 nm. When the particle size of the solid electrolyte particles 12 falls within the aforementioned range, proper electrode density or tap density may drive the fast transport of lithium ions between the active materials.

### 1-3. First conductive material

The first conductive material 14 is mainly distributed near the surface of the positive electrode active material particles, and contributes to the formation of conductive networks between the positive electrode active material particles or between the positive electrode active material particles and the positive electrode current collector.

Examples of the first conductive material 14 may include, but are not limited to, carbon materials, metal materials, conductive metal oxides or conductive polymers. Preferably, the first conductive material 14 includes a carbon material. Examples of the carbon material may include carbon nanotubes, carbon nanofibers, artificial graphite, natural graphite, carbon black, acetylene black, Ketjen black, Denka black, thermal black, channel black, furnace black, lamp black or carbon fibers. The first conductive material 14 may include a mixture of materials. More preferably, the first conductive material 14 includes carbon nanotubes. The first conductive material 14 may include carbon nanotubes.

The first conductive material 14 may include a linear carbon material. Compared to spherical carbon materials, linear carbon materials may form continuous electron conduction pathways within the electrode. The formation of the continuous conductive networks achieves fast transport of electrons and ensures higher stability than point contact-dependent spherical particles-based conductive networks. Furthermore, when the first conductive material 14 includes the linear carbon material, uniform reactions of the active materials in the electrode may prevent or reduce ion diffusion bottlenecks that occur in high-rate charging/discharging conditions. Therefore, when the first conductive material 14 includes the linear carbon material, initial efficiency and rate characteristics may be improved.

The carbon nanotubes included in the first conductive material 14 may include single-walled carbon nanotubes (SWCNT) or multi-walled carbon nanotubes (MWCNT). The single-walled carbon nanotubes outperform multi-walled carbon nanotubes in terms of electron conduction. On the other hand, the multi-walled carbon nanotubes are easier to produce and more cost-effective than single-walled carbon nanotubes.

The first conductive material 14 has higher crystallinity than the second conductive material 16. When the first conductive material 14 includes the carbon material, a peak intensity ratio (G/D ratio) in the Raman spectrum may be used as an indicator of the crystallinity of the carbon material. Specifically, the carbon material included in the first conductive material 14 has a larger G/D ratio (I_{G}/I_{D}) than the carbon material included in the second conductive material 16, where the maximum peak intensity in the range of 1560 cm⁻¹ to 1600 cm⁻¹ in the Raman spectrum is I_{G}, and the maximum peak intensity in the range of 1310 cm⁻¹ to 1350 cm⁻¹ is I_{D}. For example, the G/D ratio of the carbon material included in the first conductive material 14 may be 5 or more and 100 or less, 10 or more and 80 or less, or 20 or more and 70 or less when using the diffraction grating of 300 gr/mm. Generally, in the Raman spectrum of the carbon material, the peak originating from the graphite structure (referred to as G band) is observed around 1580 cm⁻¹, and the peak originating from defects in the graphite structure (referred to as D band) is observed around 1350 cm⁻¹. As the G/D ratio is larger, the carbon material has fewer defects in the graphite structure and higher crystallinity. When the G/D ratio is 10 or more, due to few defects in the graphite structure of the carbon material, electron conduction pathways may be sufficiently formed during charging and discharging.

Here, presumably, the vast majority of solid electrolyte particles 12 will decompose at the surface of the positive electrode material, and thus, it is general to form a Li conducting coating of LiNbO₃ on the surface of the positive electrode. Charging and discharging at high temperature or high voltage require faster intercalation and deintercalation of Li. Therefore, when the first conductive material 14 having high crystallinity and high conductivity is present near the positive electrode material, electrons may flow to the positive electrode material fast during intercalation and deintercalation of Li. In general, it is thought that the conductive material tends to react easily with the solid electrolyte particles, so when the first conductive material 14 contacts the solid electrolyte particles 12, the solid electrolyte particles 12 are likely to decompose by reactions with the first conductive material 14. However, as shown in FIG. 1, when the first conductive material 14 is located near the positive electrode active material particles 10 rather than the solid electrolyte particles 12, the proportion of electrons consumed in oxidation and reduction of the positive electrode material increases before the decomposition of the solid electrolyte particles 12. Therefore, the decomposition of the solid electrolyte particles 12 driven by the first conductive material 14 may be relatively suppressed.

The average length of the carbon nanotubes included in the first conductive material 14 is, for example, 0.5 µm or more and 200 µm or less, 1 µm or more and 100 µm or less, 2 µm or more and 50 µm or less, or 5 µm or more and 10 µm or less. Here, the 'average length' refers to the average length of the top 100 objects (here, carbon nanotubes) and the bottom 100 objects (here, carbon nanotubes) in the length observed by SEM. The carbon nanotubes having the length of 1 µm or more and 500 µm or less may efficiently form electron conduction pathways between the active material particles or between the active material particles and the current collector without excessive agglomeration of the carbon nanotubes in the electrode manufacturing.

The first conductive material 14 may, for example, have a length that is large enough to contact the plurality of positive electrode active material particles 10 having the average particle size of 1 µm to 20 µm.

The average diameter of the carbon nanotubes included in the first conductive material 14 is not limited to a particular range, but is, for example, 1 nm or more and less than 1 µm, 5 nm or more and 500 nm or less, 10 nm or more and 200 nm or less, or 20 nm or more and 100 nm or less. Here, the "average diameter" refers to the average diameter of the top 100 objects (here, carbon nanotubes) and the bottom 100 objects (here, carbon nanotubes) in the diameter observed by SEM. When the average diameter of the carbon nanotubes is 1 nm or more and less than 1 µm, the carbon nanotubes are easily dispersed in the positive electrode without excessive agglomeration.

The amount of the first conductive material 14 is, for example, 0.01 mass% or more and 1 mass% or less, 0.02 mass% or more and 0.5 mass% or less, 0.025 mass% or more and 0.2 mass% or less, or 0.05 mass% or more and 0.1 mass% or less, based on the total mass of the positive electrode active material. When the amount of the first conductive material 14 is 0.01 mass% or more, conductive networks in the positive electrode may be efficiently formed. When the amount of the first conductive material 14 is 1 mass% or less, the decomposition of the solid electrolyte particles 12 driven by the first conductive material 14 may be suppressed while maintaining dispersibility and stability of the conductive material.

### 1-4. Second conductive material

In the same way as the first conductive material 14, the second conductive material 16 primarily contacts the surface of the positive electrode active material particles and/or the positive electrode current collector, thereby contributing to the formation of conductive networks between the positive electrode active material particles or between the positive electrode active material particles and the positive electrode current collector.

Examples of the second conductive material 16 may include, but are not limited to, carbon materials, metal materials, conductive metal oxides or conductive polymers. Preferably, the second conductive material 16 includes a carbon material. Examples of the carbon material may include carbon nanotubes, carbon nanofibers, artificial graphite, natural graphite, carbon black, acetylene black, Ketjen black, Denka black, thermal black, channel black, furnace black, lamp black or carbon fibers. The second conductive material 16 may include a mixture of materials. More preferably, the second conductive material 16 includes carbon nanofibers. The second conductive material 16 may include carbon nanofibers.

The second conductive material 16 may include a linear carbon material. Compared to spherical carbon materials, linear carbon materials may form continuous electron conduction pathways within the electrode. The formation of the continuous conductive networks achieves fast transport of electrons and ensures higher stability than point contact-dependent spherical particles-based conductive networks. Furthermore, when the second conductive material 16 includes the linear carbon material, uniform reactions of the active materials in the electrode may prevent or reduce ion diffusion bottlenecks that occur in high-rate charging/discharging conditions. Therefore, when the second conductive material 16 includes the linear carbon material, initial efficiency and rate characteristics may be improved.

The second conductive material 16 has lower crystallinity than the first conductive material 14. When each of the first conductive material 14 and the second conductive material 16 include the carbon material, the G/D ratio of the first conductive material 14 is larger than the G/D ratio of the second conductive material 16. When the second conductive material 16 includes the carbon material, the G/D ratio of the carbon material included in the second conductive material 16 may, for example, be 1 or more and 10 or less, 1.5 or more and 6 or less, or 2 or more and 5 or less. When the G/D ratio is 10 or less, the carbon material has some defects in the graphite structure, resulting in low reactivity of the carbon material, thereby suppressing the decomposition of the solid electrolyte particles 12 driven by the second conductive material 16. For example, when the second conductive material 16 includes carbon nanofibers having low crystallinity, due to low transverse conductivity of the carbon nanofibers, when the carbon nanofibers contact the solid electrolyte particles 12, the solid electrolyte particles 12 are least likely to undergo decomposition reactions.

The average length of the carbon nanofibers included in the second conductive material 16 is, for example, 1 µm or more and 500 µm or less, 2 µm or more and 100 µm or less, 5 µm or more and 50 µm or less, or 6 µm or more and 15 µm or less. Preferably, the average length of the carbon nanofibers included in the second conductive material 16 is larger than the average length of the first conductive material 14, and for example, is larger than the average length of the carbon nanotubes included in the first conductive material 14. The carbon nanofibers having the length of 1 µm or more and 500 µm or less may efficiently form electron conduction pathways between the active material particles or between the active material particles and the current collector without excessive agglomeration of the carbon nanofibers in the electrode manufacturing.

The second conductive material 16 may, for example, have a length that is large enough to contact the plurality of positive electrode active material particles 10 having the average particle size of 1 µm to 20 µm. For example, when observed by SEM, 50% (based on the number) or more, 60% or more, 70% or more, 80% or more, 90% or more, or 100% of the second conductive material 16 in the positive electrode composite preferably contact both the positive electrode active material particles 10 and the electrode current collector, or the plurality of positive electrode active material particles 10.

The average length of the second conductive material 16 is preferably larger than the average particle size of the positive electrode active material particles 10 to easily bring the second conductive material 16 into contact with the plurality of positive electrode active material particles 10. For example, the average length of the second conductive material 16 is larger at least 1 time, at least 2 times, at least 5 times, or at least 10 times than the average particle size of the positive electrode active material particles 10.

The average diameter of the carbon nanofibers included in the second conductive material 16 is not limited to a particular range, but is, for example, 10 nm or more and less than 1 µm, 20 nm or more and 500 nm or less, 50 nm or more and 300 nm or less, or 100 nm or more and 200 nm or less. When the average diameter of the carbon nanofibers is 10 nm or more and less than 1 µm, the carbon nanofibers are easily dispersed in the positive electrode without excessive agglomeration.

The amount of the second conductive material 16 is, for example, 0.1 mass% or more and 5 mass% or less, 0.5 mass% or more and 4 mass% or less, or 1 mass% or more and 3 mass% or less, based on the total mass of the positive electrode composite. When the amount of the second conductive material 16 is 0.1 mass% or more, conductive networks in the positive electrode may be efficiently formed. When the amount of the second conductive material 16 is 5 mass% or less, the decline in energy density of the battery may be prevented. On the other hand, the amount of the second conductive material 16 is, for example, 0.1 mass% or more and 10 mass% or less, 0.5 mass% or more and 8 mass% or less, 1 mass% or more and 5 mass% or less, or 2 mass% or more and 4 mass% or less, based on the total mass of the positive electrode active material.

### 1-5. Formation of electron conduction pathway

Because the first conductive material 14 and the second conductive material 16 have high electron conductivity, electron conduction pathways are formed between the active material particles and the electrode current collector, or between the active material particles. The first conductive material 14 distributed with high density near the positive electrode active material particles 10 forms electron conduction pathways primarily near the positive electrode active material particles 10. On the other hand, the second conductive material 16 forms electron conduction pathways primarily between the plurality of positive electrode active material particles 10, or between the positive electrode active material particles 10 and the electrode current collector.

As described above, the second conductive material 16 has lower crystallinity than the first conductive material 14. Because the first conductive material 14 having high crystallinity is distributed near the positive electrode active material particles 10, the second conductive material 16 having lower crystallinity than the first conductive material 14 is distributed with high density near the solid electrolyte particles 12, compared to the distribution of the first conductive material 14. When the second conductive material 16 has an elongated shape with sides and cross section (i.e., edges) and has lower crystallinity than the first conductive material 14, due to many transverse defects of the second conductive material 16, presumably, electrons are more likely to flow between the edges of the second conductive material 16 rather than the lateral side. Because the second conductive material 16 having lower crystallinity than the first conductive material 14 is less likely to drive the decomposition of the solid electrolyte particles 12, it may be possible to form electron conduction pathways by both the first conductive material 14 and the second conductive material 16 throughout the positive electrode composite and suppress the decomposition reaction of the solid electrolyte particles 12.

When viewed from the positive electrode active material particles, electron conduction pathways with the electrode current collector or other active material particles are preferably formed. For example, when observed by SEM, 50% (based on the number) or more, 60% or more, 70% or more, 80% or more, 90% or more, or 100% of the positive electrode active material particles in the positive electrode composite preferably contact the first conductive material 14 or the second conductive material 16. In addition, when observed by SEM, 50% (based on the number) or more, 60% or more, 70% or more, 80% or more, 90% or more, or 100% of the positive electrode active material particles in the positive electrode composite preferably contact the first conductive material 14 or the second conductive material 16, and furthermore, the first conductive material 14 or the second conductive material 16 preferably contacts the electrode current collector or other positive electrode active material particles.

As described above, the first conductive material 14 and the second conductive material 16 may form electron conduction pathways between the active material particles and the electrode current collector that are not in contact with each other, and between the plurality of active material particles that are not in contact with each other. Accordingly, fast electron conduction in the positive electrode may be achieved, and the active material particles in the positive electrode may be encouraged to uniformly engage in the charging and discharging reactions. As a result, the battery capacity may be improved. In addition, because the first conductive material 14 and the second conductive material 16 have high ability to conduct electrons, energy loss such as heat generation under high current may be suppressed. As a result, the rate characteristics (particularly, rapid charging and discharging characteristics) may be improved.

Meanwhile, the first conductive material 14 or the second conductive material 16 may not directly contact the positive electrode active material. For example, when the surface of the positive electrode active material particles is coated with the conductive material such as carbon, the first conductive material 14 or the second conductive material 16 contacts the positive electrode active material particles through the coating, but also in this case, electron conduction pathways are formed. Therefore, the contact between the first conductive material 14 or the second conductive material 16 and the positive electrode active material particles is not limited to direct contact, and may include indirect contact through an intermediary, provided that the first conductive material 14 or the second conductive material 16 forms electron conduction pathways that mediate electron conduction between the positive electrode active material particles. In addition, the first conductive material 14 or the second conductive material 16 may support the positive electrode active material particles by adsorption, but may simply contact the positive electrode active material particles without needing to support them. For example, the first conductive material 14 or the second conductive material 16 may not adsorb the positive electrode active material particles.

### 2. Method for manufacturing positive electrode composite

The method for manufacturing the positive electrode composite for the all-solid-state battery according to this embodiment includes the steps of:
(a) mixing the positive electrode active material with the first conductive material to prepare the positive electrode active material/first conductive material mixture
(b) mixing the positive electrode active material/first conductive material mixture with the solid electrolyte and the second conductive material having lower crystallinity than the first conductive material

By the stepwise mixing in the steps (a) and (b), the first conductive material 14 may be distributed with high density near the positive electrode active material particles 10. That is, because only the positive electrode active material particles 10 and the first conductive material 14 are mixed in the step (a), the positive electrode active material/first conductive material mixture obtained in the step (a) has a particle placement structure in which the first conductive material 14 is located near the positive electrode active material particles 10. For example, all or some of the first conductive material 14 may be physically bonded to the surface of the positive electrode active material particles 10 by intermolecular forces. Subsequently, in the step (b), the positive electrode active material/first conductive material mixture, the solid electrolyte particles 12 and the second conductive material 16 are mixed. The particle placement structure in which the first conductive material 14 obtained in the step (a) is located near the positive electrode active material particles 10 may be maintained to some extent during the mixing in the step (b). For example, when the first conductive material 14 physically bonded to the surface of the positive electrode active material particles 10 undergoes the step (b) of mixing, a predetermined part (based on the number) of the first conductive material 14 may remain physically bonded to the surface of the positive electrode active material particles 10 even after the step (b). As a result, the positive electrode composite in which the first conductive material 14 is distributed near the positive electrode active material particles 10 is obtained.

The above-described method is an example of the method for distributing the first conductive material 14 over the positive electrode composite. The positive electrode composite having uneven distribution of the first conductive material 14 as described above may be manufactured by any other methods. For example, the positive electrode active material particles 10 or the first conductive material 14 may be chemically modified to make it easy to form bonds between the positive electrode active material particles 10 and the first conductive material 14.

The mixing may be performed using a dry mixer, a stirrer, a shaker, for example, an orbital shaker, a mortar mixer, a milling machine, for example, a planetary ball mill, commonly used for powder mixing, but is not limited thereto. The mixing method is not limited to dry mixing, and may include wet mixing using any liquid medium. In addition, any additives may be added.

### 3. All-solid-state battery

The all-solid-state battery according to this embodiment comprises a positive electrode comprising the positive electrode composite, a negative electrode, and a solid electrolyte layer between the positive electrode and the negative electrode. The all-solid-state battery may include a lithium ion secondary battery.

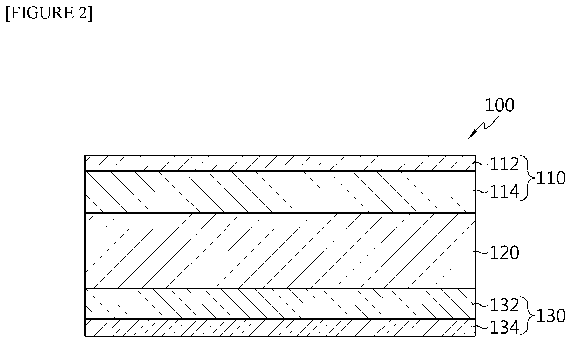

FIG. 2 is a diagram showing the structure of the all-solid-state battery 100 according to an embodiment. As shown in FIG. 2, the all-solid-state battery 100 comprises the positive electrode 110, the solid electrolyte layer 120 and the negative electrode 130 in that order. The positive electrode 110 comprises a positive electrode current collector 112 and a positive electrode composite layer 114. The negative electrode 130 comprises a negative electrode material layer 132 and a negative electrode current collector 134. However, for example, when the negative electrode is formed of metallic lithium alone, the negative electrode material layer 132 and the negative electrode current collector 134 are incorporated into one. As a whole, the all-solid-state battery 100 is formed by stacking the positive electrode current collector 112, the positive electrode composite layer 114, the solid electrolyte layer 120, the negative electrode material layer 132 and the negative electrode current collector 134 in that order.

### 3-1. Positive electrode

In the all-solid-state battery 100 according to an embodiment, the positive electrode 110 comprises the positive electrode current collector 112 and the positive electrode active material layer 114 present on one or two surfaces of the positive electrode current collector 112. The positive electrode active material layer 114 may be formed on all or part of the surface of the positive electrode current collector 112.

### 3-1-1. Positive electrode current collector

The positive electrode current collector 112 used in the positive electrode 110 is not limited to a particular material and may include any conductive material that does not cause a chemical change in the battery. For example, the positive electrode current collector 112 may include stainless steel; aluminum; nickel; titanium; sintered carbon; aluminum or stainless steel treated with carbon, nickel, titanium or silver on the surface.

The positive electrode current collector 112 may, for example, have a thickness of 3 µm or more and 500 µm or less. The positive electrode current collector 112 may have fine textured surfaces to increase the adhesion strength with respect to the positive electrode active material. The positive electrode current collector 112 may come in different forms, for example, a film, a sheet, a foil, a net, a porous body, a foam or a non-woven fabric body.

### 3-1-2. Positive electrode active material layer

The positive electrode active material layer 114 may include the positive electrode composite. In addition to the positive electrode composite, the positive electrode active material layer 114 may include a binder or additive.

The thickness of the positive electrode active material layer 114 may, for example, be 1 µm or more and 500 µm or less, or 5 µm or more and 250 µm or less, 10 µm or more and 200 µm or less, 20 µm or more and 150 µm or less, or 50 µm or more and 100 µm or less.

### 3-1-3. Binder

The positive electrode active material layer 114 may further include a binder. The binder is used to ensure adhesion between the positive electrode active material particles or between the positive electrode active material particles and the current collector. The binder is not limited to a particular type and may include any type of binder commonly used in the corresponding technical field. The binder may include, for example, vinylidene fluoride-hexafluoropropylene copolymer (PVDF-co-HFP), polyvinyl alcohol, polyacrylonitrile, starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, carboxymethyl cellulose (CMC), styrenebutadiene rubber (SBR), fluororubber, or copolymers thereof. These materials may be used alone or in combination.

The binder may, for example, be included in an amount of 10 mass% or less, and preferably 0.1 mass% to 5 mass%, based on the total mass of the positive electrode active material layer 114. When the amount of the binder falls within the aforementioned range, it may be possible to achieve high adhesion strength with respect to electrode while minimizing an increase in electrode resistance.

### 3-2. Negative electrode

The negative electrode 130 may include lithium metal alone, or may include the negative electrode current collector 134 and the negative electrode active material layer 132 present on one or two surfaces of the negative electrode current collector 134. The negative electrode active material layer 132 may be formed on all or part of the surface of the negative electrode current collector 134.

### 3-2-1. Negative electrode current collector

The negative electrode current collector 134 used in the negative electrode is not limited to a particular material and may include any conductive material that does not cause a chemical change in the battery. For example, the negative electrode current collector 134 may include copper; stainless steel; aluminum; nickel; titanium; sintered carbon; copper or stainless steel treated with carbon, nickel, titanium or silver on the surface; or aluminum-cadmium alloy.

The negative electrode current collector 134 may have a thickness of 3 µm or more and 500 µm or less. The negative electrode current collector 134 may have fine textured surfaces to increase the adhesion strength with respect to the negative electrode active material. The negative electrode current collector 134 may come in different forms, for example, a film, a sheet, a foil, a net, a porous body, a foam, or a non-woven fabric body.

### 3-2-2. Negative electrode active material layer

The negative electrode active material layer 132 includes a negative electrode active material and a solid electrolyte. The negative electrode active material layer 132 may include a conductive material, a binder or an additive, if necessary. The conductive material is not limited to a particular one and may include any conductive material that does not cause a chemical change in the battery. The solid electrolyte and the binder are the same as those described above, and its description is omitted.

The negative electrode active material may include, for example, lithium metals; lithium alloys; lithium metal composite oxide; lithium-containing titanium composite oxide (LTO); carbonaceous materials such as artificial graphite, natural graphite, graphitized carbon fiber or amorphous carbon; metallic compounds capable of alloying with lithium, such as Si, Al, Sn, Pb, Zn, Bi, In, Mg, Ga, Cd, Si alloys, Sn alloys or Al alloys; metallic oxide capable of doping and dedoping lithium, such as SiOᵥ (0<v<2), SnO_{2,} vanadium oxide, lithium vanadium oxide, LiₓFe₂O₃ (0<x≤1) or LiₓWO₂ (0<x≤1); and composites including the above-described metallic compounds and the above-described carbonaceous materials, such as Si-C composites or Sn-C composites. They may be used alone or in combination.

The negative electrode active material may be included in an amount of 70 mass% to 100 mass%, preferably 80 mass% to 99 mass%, based on the total mass of the negative electrode active material layer 132. When the amount of the electrode active material falls within the aforementioned range, high energy density, electrode adhesion strength and electrical conductivity may be achieved.

### 3-3. Solid electrolyte layer

The solid electrolyte layer 120 is positioned between the positive electrode 110 and the negative electrode 130 and mediates the transport of lithium ions between the positive electrode active material and the negative electrode active material. The solid electrolyte layer 120 acts as a separator layer to physically separate the positive electrode 110 from the negative electrode 130, thereby preventing short circuits between the electrodes.

The solid electrolyte layer 120 is, for example, a layer formed of the same material as the solid electrolyte included in the positive electrode composite. In this case, the solid electrolyte particles 12 are included in any of the positive electrode active material layer 114, the negative electrode active material layer 132, and the solid electrolyte layer 120. However, the solid electrolyte layer 120 may further include another solid electrolyte or additive, or may be formed of another solid electrolyte.

### 4. Method for manufacturing all-solid-state battery

The method for manufacturing the all-solid-state battery 100 is not limited to a particular one. For example, the all-solid-state battery 100 may be manufactured by sequentially feeding the constituent materials of the battery into a cylindrical mold and applying pressure. Alternatively, the all-solid-state battery 100 may be manufactured by forming each layer of the all-solid-state battery 100, stacking them and applying pressure. In addition, any other method may be used.

### 5. Effects

The above-described positive electrode composite includes a combination of the first conductive material having high crystallinity and the second conductive material having low crystallinity to form electron conduction networks between the positive electrode active material particles and the positive electrode current collector and between the positive electrode active material particles, and in which the first conductive material that is highly likely to decompose the solid electrolyte particles is distributed near the positive electrode active material particles, thereby suppressing the decomposition of the solid electrolyte particles. Accordingly, charge/discharge efficiency and life characteristics of the battery may be improved.

### EXAMPLES

Hereinafter, examples and comparative examples will be described. However, the present disclosure is not limited to these examples. Furthermore, the following considerations are merely exemplary conjectures intended to aid understanding of the invention and do not limit the invention.

### Preparation Example 1

### Preparation of positive electrode composite

An N-methyl pyrrolidone (NMP) solution containing 0.1 parts by mass of single-walled carbon nanotubes (SWCNT) as a first conductive material was added to 100 parts by mass of positive electrode active material LiNi_{0.8}Co_{0.1}Mn_{0.1}O₂ powder having an average particle size of about 5 µm and mixed for 3 minutes using a planetary mixer (2000 rpm) to obtain a slurry which in turn, was dried at 130°C for 12 hours to obtain a positive electrode active material/SWCNT mixture.

63 parts by mass of the obtained positive electrode active material/SWCNT mixture and 35 parts by mass of argyrodite-based solid electrolyte Li₆PS₅Cl powder were mixed, 2 parts by mass of carbon nanofibers (CNF, average length 12 µm) as a second conductive material were added to the mixture and mixed using a mortar to create a homogeneous mixture, thereby obtaining a positive electrode composite.

### Preparation of all-solid-state battery

A positive electrode current collector (SUS plate) 112, a positive electrode composite layer 114, a sulfide-based solid electrolyte separator layer 120, a negative electrode Li metal layer 132 and a negative electrode current collector (SUS430 plate) 134 were stacked in that order as shown in FIG. 2, followed by compression, to manufacture an all-solid-state battery 100.

### Preparation Example 2

An all-solid-state battery 100 was manufactured by the same method as Preparation Example 1, except that the mass ratio of the positive electrode active material/SWCNT mixture, the argyrodite-based solid electrolyte and the second conductive material (CNF) was 78:20:2.

### Preparation Example 3

An all-solid-state battery 100 was manufactured by the same method as Preparation Example 2, except that the amount of the first conductive material (SWCNT) added was 0.05 parts by mass based on 100 parts by mass of the positive electrode active material.

### Preparation Example 4

An all-solid-state battery 100 was manufactured by the same method as Preparation Example 2, except that the amount of the first conductive material (SWCNT) added was 0.025 parts by mass based on 100 parts by mass of the positive electrode active material.

### Preparation Example 5

An all-solid-state battery 100 was manufactured by the same method as Preparation Example 1, except that the first conductive material (SWCNT) was not added.

### Preparation Example 6

An all-solid-state battery 100 was manufactured by the same method as Preparation Example 1, except that the second conductive material (CNF) was not added.

### Preparation Example 7

An all-solid-state battery 100 was manufactured by the same method as Preparation Example 1, except that Super P was used as the second conductive material, instead of CNF.

### Preparation Example 8

An all-solid-state battery 100 was manufactured by the same method as Preparation Example 2, except that Super P was used as the second conductive material, instead of CNF.

### Preparation Example 9

An all-solid-state battery 100 was manufactured by the same method as Preparation Example 1, except that 1.6 parts by mass of Super P was added as the first conductive material, instead of 0.1 parts by mass of SWCNT to obtain the positive electrode active material/first conductive material mixture, and the amount of the second conductive material (CNF) added was 1 part by mass when manufacturing the positive electrode composite.

TABLE 1 below summarizes the preparation conditions of Preparation Examples 1 to 9. All the values in TABLE 1 indicate parts by mass.

**TABLE 1**

| Preparation Example | | | 1 | 2 | 3 | 4 | 5 | 6 | 7 | 8 | 9 |
|---|---|---|---|---|---|---|---|---|---|---|---|
| Type of first conductive material | | | SWC NT | SWC NT | SWC NT | SWC NT | SWC NT | SWC NT | SWC NT | SWC NT | Sup er P |
| Positive electrode active material/ First conducti ve material mixture | Positive electrode active material | | 100 | 100 | 100 | 100 | 100 | 100 | 100 | 100 | 100 |
| | First conductive material | | 0.1 | 0.1 | 0.05 | 0.025 | 0 | 0.1 | 0.1 | 0.1 | 1.6 |
| Positive electrode composit e | Positive electrode active material/First conductive material mixture | | 63 | 78 | 78 | 78 | 63 | 63 | 63 | 78 | 64 |
| | Solid electrolyte | | 35 | 20 | 20 | 20 | 35 | 35 | 35 | 20 | 35 |
| | Second conduct ive materia l | CN F | 2 | 2 | 2 | 2 | 2 | 0 | - | - | 1 |
| | | Sup er P | - | - | - | - | - | - | 2 | 2 | - |

### Examples 1 to 7 and Comparative Examples 1 to 9

The all-solid-state batteries manufactured in Preparation Examples 1 to 9 have undergone aging in a constant-temperature bath maintained at 45°C or 60°C with the upper limit charge voltage of 4.25 V and the lower limit discharge voltage of 3 V at the initial charge rate of 0.05 C and the initial discharge rate of 0.05 C, where 1 C = 200 mAh/g. Here, Examples 1 to 7 and Comparative Examples 1 to 9 are defined as follows according to each Preparation Example and the temperature of the constant-temperature bath for aging.
(1) Examples 1 to 4: For each of the all-solid-state batteries manufactured in Preparation Examples 1 to 4, the aging was performed in the constant-temperature bath maintained at 45°C.
(2) Examples 5 to 7: For each of the all-solid-state batteries manufactured in Preparation Examples 1 to 3, the aging was performed in the constant-temperature bath maintained at 60°C.
(3) Comparative Examples 1 and 2: For each of the all-solid-state batteries manufactured in Preparation Examples 5 and 6, the aging was performed in the constant-temperature bath maintained at 45°C.
(4) Comparative Example 3: For the all-solid-state battery manufactured in Preparation Example 5, the aging was performed in the constant-temperature bath maintained at 60°C.
(5) Comparative Examples 4 to 6: For each of the all-solid-state batteries manufactured in Preparation Examples 7 to 9, the aging was performed in the constant-temperature bath maintained at 45°C.
(6) Comparative Examples 7 to 9: For each of the all-solid-state batteries manufactured in Preparation Examples 7 to 9, the aging was performed in the constant-temperature bath maintained at 60°C.

### Evaluation Example 1: Battery capacity and rate characteristics

For each of Examples 1 to 7 and Comparative Examples 1 to 9, the charge/discharge capacity in the first charge/discharge cycle at the initial charge/discharge rate was calculated. The charge/discharge capacity calculated for each of Examples and Comparative Examples was divided by the charge/discharge capacity (reference value) of Comparative Example 1, and the results are defined as 'initial charge capacity' and 'initial discharge capacity', defined by the following Equations, respectively. $\begin{matrix}Initial charge capacity \\ = \frac{Charge capacity \left(mAh\right) of target battery in inital charge and discharge cycle}{Charge capacity \left(mAh\right) of battery of COM . EX . 1 in initial charge and discharge cycle} \times 100 %\end{matrix}$ Equation 1 $\begin{matrix}Initial discharge capacity \\ = \frac{Discharge capacity \left(mAh\right) of target battery in inital charge and discharge cycle}{Discharge capacity \left(mAh\right) of battery of COM . EX . 1 in initial charge and discharge cycle} \times 100 %\end{matrix}$ Equation 2 $\begin{matrix}Initial efficiency \\ = \frac{Discharge capacity \left(mAh\right) of target battery in inital charge and discharge cycle}{Charge capacity \left(mAh\right) of target battery in initial charge and discharge cycle} \times 100 %\end{matrix}$ Equation 3

TABLE 2-1 and TABLE 2-2 below summarize the numbers of the Preparation Examples corresponding to Examples 1 to 7 and Comparative Examples 1 to 9, the temperature of the constant-temperature bath in the battery characteristics evaluation test, and the values of the initial charge/discharge capacity. Here, the values of the initial charge/discharge capacity are relative values to Comparative Example 1, and are dimensionless quantities.

**TABLE 2-1**

| Example | 1 | 2 | 3 | 4 | 5 | 6 | 7 |
|---|---|---|---|---|---|---|---|
| Preparation Example | 1 | 2 | 3 | 5 | 1 | 2 | 3 |
| Constant-temperature bath temperature (°C) | 45 | 45 | 45 | 45 | 60 | 60 | 60 |
| Initial charge capacity (relative value) | 1.17 | 1.21 | 1.19 | 1.17 | 1.20 | 1.23 | 1.22 |
| Initial discharge capacity (relative value) | 1.21 | 1.23 | 1.22 | 1.21 | 1.24 | 1.24 | 1.25 |
| Initial efficiency (%) | 93.2 | 92.0 | 92.8 | 93.6 | 93.3 | 91.3 | 92.1 |

**TABLE 2-2**

| Comparative Example | 1 | 2 | 3 | 4 | 5 | 6 | 7 | 8 | 9 |
|---|---|---|---|---|---|---|---|---|---|
| Preparation Example | 5 | 6 | 5 | 7 | 8 | 9 | 7 | 8 | 9 |
| Constant-temperature bath temperature (°C) | 45 | 45 | 60 | 45 | 45 | 45 | 60 | 60 | 60 |
| Initial charge capacity (relative value) | 1 | 1.02 | 0.84 | 1.17 | 1.17 | 1.10 | 1.26 | 1.26 | 1.26 |
| Initial discharge capacity (relative value) | 1 | 1.05 | 0.73 | 1.18 | 1.18 | 1.10 | 1.20 | 1.22 | 1.09 |
| Initial efficiency (%) | 90.4 | 93.7 | 77.8 | 91.7 | 91.7 | 90.3 | 86.4 | 88.1 | 85.6 |

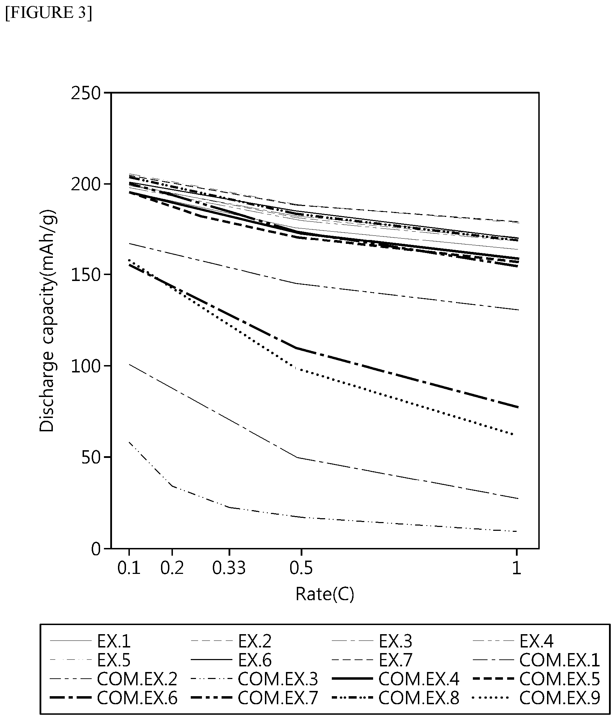

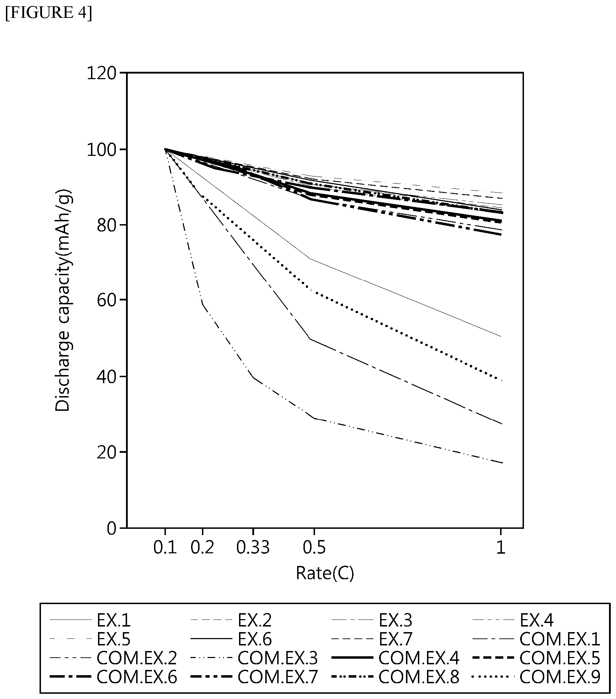

For each of Examples 1 to 7 and Comparative Examples 1 to 9, after aging, a rate test was performed with the fixed charge current of 0.1 C and varying discharge rates of 0.1 C → 0.2 C → 0.33 C → 0.5 C → 1.0 C in that order. FIGS. 3 and 4 are graphs showing changes in discharge capacity as a function of the discharge rate in Examples 1 to 7 and Comparative Examples 1 to 9. The vertical axis in FIG. 3 represents the actual measured discharge capacity, and the vertical axis in FIG. 4 represents the normalized discharge capacity with the discharge capacity at a 0.1 C rate used as 100% for each Example to easily compare changes in discharge capacity of each of Examples and Comparative Examples (the normalized discharge capacity is referred to as 'rate characteristic').

### Evaluation Example 2: Scanning Electron Microscopy (SEM)

The positive electrode composite of Example 1 was observed by SEM. The measurement conditions are as follows.

### Measurement conditions

- Device used: JSM-IT800 (Rigaku)
- Acceleration voltage: 1.0V

As a result of observation by SEM, as shown in FIG. 1, relatively large positive electrode active material particles, relatively small solid electrolyte particles, relatively small tubular SWCNTs distributed near the positive electrode active material particles, and relatively large fibrous CNFs distributed throughout the positive electrode composite were seen.

### Evaluation Example 3: Microscopic Raman spectroscopy analysis

The positive electrode composite of Example 1 was observed using a Raman microscope. The measurement conditions are as follows.

### Measurement conditions

- Device used: RAMANtouch (nano photon)
- Irradiated light wavelength: 532 nm
- Diffraction grating: 300 gr/mm
- Slit width: 50 µm
- Objective lens: TU Plan Fluor x20/NA 0.45
- Irradiation time: 2s
- Number of accumulations: 20 times
- Measurement mode: XY Averaging (AreaFlash)

As a result of observation using the Raman microscope, in the same way as the SEM observation results of Evaluation Example 2, positive electrode active material particles, solid electrolyte particles, SWCNT and CNF were seen as shown in FIG. 1.

Subsequently, the Raman spectrum was measured at locations where smaller fibrous particles are present and larger fibrous particles are absent, and the ratio (G/D ratio) of the maximum peak intensity IG of the G band (1560 cm⁻¹ to 1600 cm⁻¹) to the maximum peak intensity ID of the D band (1310 cm⁻¹ to 1350 cm⁻¹) was calculated. Likewise, the Raman spectrum was measured at locations where larger fibrous particles are present and smaller fibrous particles are absent, and the G/D ratio was calculated. Below are the values when normalization to the G band was performed. In addition, TABLE 3 below also shows the maximum peak position and the maximum peak intensity I2D of the 2D band (2600 cm⁻¹ to 2800 cm⁻¹), and the values of the ratio of IG to I2D (G/2D ratio).

**TABLE 3**

| | | D band | G band | 2D band | G/D ratio | G/2D ratio |
|---|---|---|---|---|---|---|
| First conductive material (SWCNT) | Wavenumber (cm⁻¹) | 1341.1 | 1592.3 | 2673.5 | 66.7 | 5.37 |
| | Intensity | 0.015 | 1 | 0.19 | | |
| Second conductive material (CNT) | Wavenumber (cm⁻¹) | 1352.0 | 1585.5 | 2702.7 | 2.75 | 1.19 |
| | Intensity | 0.3631 | 1 | 0.84 | | |

For Super P used in Comparative Examples 4 to 9, it was confirmed that the G/D ratio was about 1 by the above-described method.

Analysis of evaluation results of Examples and Comparative Examples

Below is the analysis of the above-described evaluation results. However, the following analysis is a hypothesis at the present time and is not intended to constrain the present disclosure by theory.

A difference between Examples and Comparative Examples lies in whether the first conductive material and the second conductive material are used together. The initial charge/discharge capacity of Comparative Examples 1 and 3 without the first conductive material (SWCNT) and Comparative Example 2 without the second conductive material (CNF) were all lower than Examples 1 to 7. In addition, rate characteristics of Comparative Examples 1 to 3 were inferior to Examples 1 to 7 in the absolute value of the discharge capacity at each rate and the capacity retention accompanied by the repeated rate tests.

In Comparative Examples 1 and 3 without the first conductive material, rate characteristics have extremely degraded. Presumably, only CNF added as the second conductive material is insufficient for the exchange of electrons between the positive electrode active material and the positive electrode current collector compared to Examples 1 to 7, resulting in a significant decrease in the charge/discharge capacity of the battery and serious performance degradation over repeated charge/discharge cycles. On the other hand, in Comparative Example 2 without the second conductive material, the charge/discharge capacity of the battery has generally decreased. Presumably, only the first conductive material distributed near the positive electrode active material is inadequate for formation of electron conduction pathways from the positive electrode active material located away from the current collector to the positive electrode active material near the current collector, and some of the positive electrode active material fail to engage in the charge/discharge reactions, resulting in low charge/discharge capacity.

In Comparative Examples 6 and 9 using Super P as the first conductive material, initial efficiency and rate characteristics have declined significantly. Compared to SWCNT in linear arrangement, Super P having spherical particle structure forms conductive pathways through point contact between particles, and presumably, this is because, when conductive pathways are formed through point contact, conductive networks are easily deteriorated. In addition, during high-rate charging/discharging, electron transport and ion diffusion bottlenecks occur, and presumably, this is because SWCNT quickly supply electrons within the electrode, whereas Super P forms conductive pathways through point contact, resulting in insufficient electron supply pathways.

In Comparative Examples 4, 5, 7 and 8 using Super P as the second conductive material, initial efficiency and rate characteristics have declined compared to the use of CNF as the second conductive material. Presumably, this is because CNF in linear arrangement forms entangled networks, leading to stable electron conduction pathways with temperature changes, whereas Super P having spherical particle structure has high surface area and increased reaction area with the solid electrolyte, and the adverse effects increase with increasing temperature. In particular, when Super P was used as the first conductive material or the second conductive material, Comparative Examples 7, 8 and 9 having undergone aging in the constant-temperature bath kept at 60°C had a significant decrease in initial efficiency. Presumably, this is because Super P having spherical particle structure has large surface area and increased reaction area with the solid electrolyte, and the adverse effects increase with increasing temperature.

### [List of Reference Numerals]

10: Positive electrode active material particle
12: Solid electrolyte particle
14: First conductive material
16: Second conductive material
100: All-solid-state battery
112: Positive electrode current collector
114: Positive electrode composite layer
120: Solid electrolyte layer
132: Negative electrode material layer
134: Negative electrode current collector

## Claims

1. A positive electrode composite for an all-solid-state battery, comprising:
a positive electrode active material, a solid electrolyte, a first conductive material and a second conductive material having lower crystallinity than the first conductive material,
wherein the first conductive material is distributed with high density near the positive electrode active material.

2. The positive electrode composite according to claim 1,
wherein the first conductive material includes a linear carbon material.

3. The positive electrode composite according to claim 1,
wherein the second conductive material includes a linear carbon material.

4. The positive electrode composite according to claim 1,
wherein the first conductive material includes carbon nanotubes.

5. The positive electrode composite according to claim 1,
wherein the second conductive material includes carbon nanofibers.

6. The positive electrode composite according to claim 1,
wherein the first conductive material and the second conductive material include a carbon material, and
wherein a G/D ratio (I_{G}/I_{D}) of the first conductive material is larger than a G/D ratio of the second conductive material where a maximum peak intensity in a range of 1560 cm⁻¹ to 1600 cm⁻¹ in a Raman spectrum is I_{G} and a maximum peak intensity in a range of 1310 cm⁻¹ to 1350 cm⁻¹ is I_{D}.

7. The positive electrode composite according to claim 6,
wherein the G/D ratio of the first conductive material is 5 or more and 100 or less when using a diffraction grating of 300 gr/mm.

8. The positive electrode composite according to claim 1,
wherein the first conductive material is included in the positive electrode composite in an amount of 0.01 mass% or more and 1 mass% or less, based on a total mass of the positive electrode active material.

9. The positive electrode composite according to claim 1,
wherein the second conductive material is included in the positive electrode composite in an amount of 0.1 mass% or more and 5 mass% or less, based on a total mass of the positive electrode composite.

10. The positive electrode composite according to claim 1,
wherein the second conductive material is substantially evenly distributed over the positive electrode active material.

11. The positive electrode composite according to claim 1,
wherein a presence proportion of the first conductive material in a first region near the positive electrode active material is larger than a presence proportion of the first conductive material in a second region outside the first region.

12. The positive electrode composite according to claim 1,
wherein a presence proportion of the second conductive material in a second region outside a first region near the positive electrode active material is larger than a presence proportion of the first conductive material in the second region.

13. A positive electrode comprising the positive electrode composite defined in any one of claims 1 to 12.

14. An all-solid-state battery comprising the positive electrode defined in claim 13.

15. A method for manufacturing a positive electrode composite, the method comprising the steps of:
mixing a positive electrode active material with a first conductive material to prepare a positive electrode active material/first conductive material mixture; and
mixing the positive electrode active material/first conductive material mixture with a solid electrolyte and a second conductive material having lower crystallinity than the first conductive material.
